## Europäisches Patentamt
## European Patent Office
## Office européen des brevets

(11) Veröffentlichungsnummer: **0 092 050**
**B1**

(12) **EUROPÄISCHE PATENTSCHRIFT**

(45) Veröffentlichungstag der Patentschrift:
04.02.87

(21) Anmeldenummer: **83102440.1**

(22) Anmeldetag: **12.03.83**

(51) Int. Cl.⁴: **B 43 L 13/02**

(54) Automatisch arbeitendes Zeichengerät.

(30) Priorität: **21.04.82  DE 3214760**

(43) Veröffentlichungstag der Anmeldung:
**26.10.83 Patentblatt 83/43**

(45) Bekanntmachung des Hinweises auf die Patenterteilung:
**04.02.87 Patentblatt 87/6**

(84) Benannte Vertragsstaaten:
**AT CH FR GB IT LI NL SE**

(56) Entgegenhaltungen:
**DE-A-3 104 962**
**GB-A-771 607**
**US-A-3 473 157**
**US-A-3 936 712**

(73) Patentinhaber: **Held, Kurt, Alte Strasse 1, D-7218 Trossingen 2 (DE)**

(72) Erfinder: **Held, Kurt, Alte Strasse 1, D-7218 Trossingen 2 (DE)**

**Beschreibung**

Gegenstand der Erfindung ist ein automatisch arbeitendes Zeichengerät gemäss dem Oberbegriff des Patentanspruchs 1.

Soll mit numerisch gesteuerten Schreibgeräten das zu schreibende Zeichen oder Symbol auf weniger als 0,2 mm genau auf eine bestimmte Stelle des Schreibfeldes geschrieben werden, so muss durch eine Justier- oder Visierhilfe die Ausrichtung des Schreibgerätes auf diese Stelle mit dem Auge und der Hand des Schreibenden schnell und sicher möglich sein. Die Schreibstifte oder -federn numerisch gesteuerter Schreibgeräte werden heute frei nach Augenmass eingerichtet, wobei dieser Arbeitsweise das normalerweise für die Abschätzung von Parallaxen und kleinen Abständen gut geschulte Auge des Zeichners oder Schreibers entgegenkommt. Positionierfehler unter 0,2 mm sind jedoch zufällig, d.h. eine Positionierung z. B. auf 0,05 mm Genauigkeit kann durch manuelles Einrichten nicht erreicht werden.

Es wurde nun gefunden, dass man diesen Nachteil durch Schaffung einer Einrichtung zum Zentrieren des Schreibstiftes in numerisch gesteuerten Schreibgeräten auf die genaue Schreibposition in einfacher Weise ausgleichen kann dadurch, dass das Auge des Bedieners das Schreibgerät einfach auf eine für die genaue Lage des zu schreibenden Zeichens vorgesehene Stelle der Zeichenfläche einrichtet, wobei dann von der Steuerung der Abstand zwischen der mit der Justierhilfe ermittelten Anschreibposition und der von der Schreibspitze während der Justierung tatsächlich eingenommenen Position vor dem Anschreiben automatisch ausgeglichen wird, wenn er grösser als null ist.

Gelöst wird diese Aufgabe durch die im Kennzeichen des Patentanspruchs 1. vermittelte technische Lehre.

Die mit den erfindungsgemässen Zentrierhilfen erzielbaren Vorteile liegen vor allem im möglichen Zeitgewinn, in höherer Positioniergenauigkeit und Treffsicherheit, sowie in geringeren Ansprüchen an die Handhabungssorgfalt des Zeichners. Wird die Zentrierhilfe als Lupe ausgebildet, so kann der Vorteil der Vergrösserung des die Zentrierposition darstellenden z. B. Bleistiftkreuzes oder -linienendes in Verbindung mit z. B. einer ringförmigen Markierung um die optische Achse der Lupe zu einer Verminderung des Positionierfehlers um den Faktor 10 führen. Eine Lochblende wiederum, deren Durchmesser etwa drei mal grösser gewählt wird als die Dicke von Massbezugs- und Masslinien in technischen Zeichnungen erleichtert und verkürzt das Setzen von Masslinienspitzen ohne den bei Lupen unvermeidbaren Lichtverlust. Eine durchsichtige Fadenkreuzplatte ist besonders geeignet für das Justieren von Ziffern oder Buchstaben in vorgedruckte Spalten und Linienwerke, z. B. Stücklisten in Schweissteilzeichnungen.

Einige Ausführungsbeispiele der Erfindung sind in den Zeichnungen erläutert.

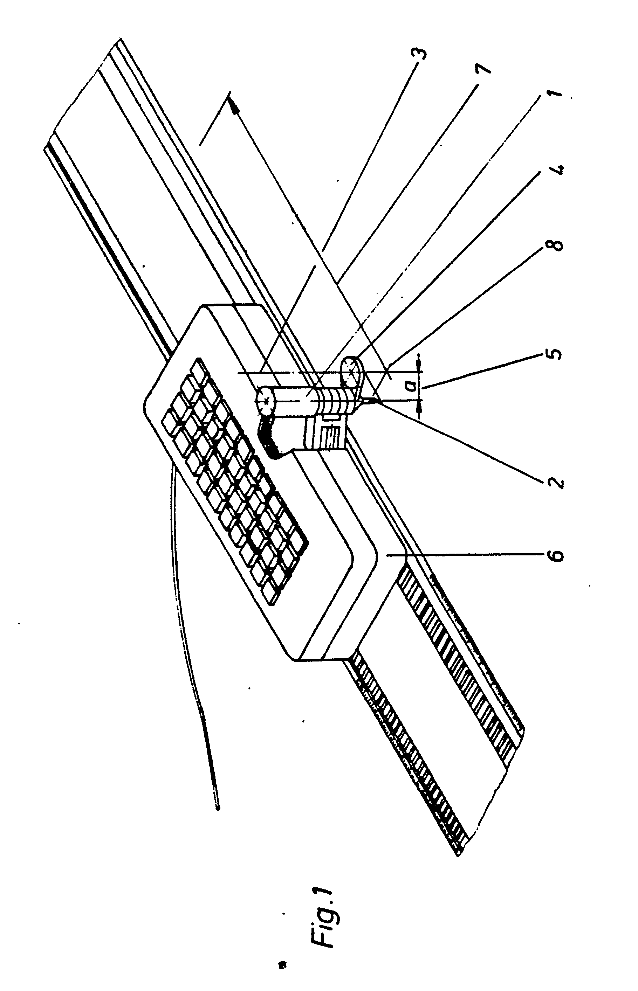

Fig. 1 zeigt schematisch dargestellt ein Schreibgerät 6. Seitlich rechts oder, wie gezeichnet links neben der im Schreibgelenk 1 befestigten Schreibspitze 2 ist mit Abstand a gegen die optische Achse 3 eine vorzugsweise aplanatische Lupe 4 angeordnet, die als Justierhilfe für das Auge des Zeichners dient, das Schreibgerät 6 beispielsweise auf das durch die Massbezugslinie 8 gegebene Ende der Masslinie 7 auszurichten, um dort die linke Masspfeilspitze zu setzen. Mit der Betätigung der entsprechenden Bedientaste wird die Schreibspitze 2 durch das Betriebsprogramm um den Abstand a bei 5 ohne Schreibkontakt versetzt und danach unter Absenken der Schreibspitze 2 in der mit der Lupe 4 fixierten Position das Zeichen hier die Masspfeilspitze geschrieben.

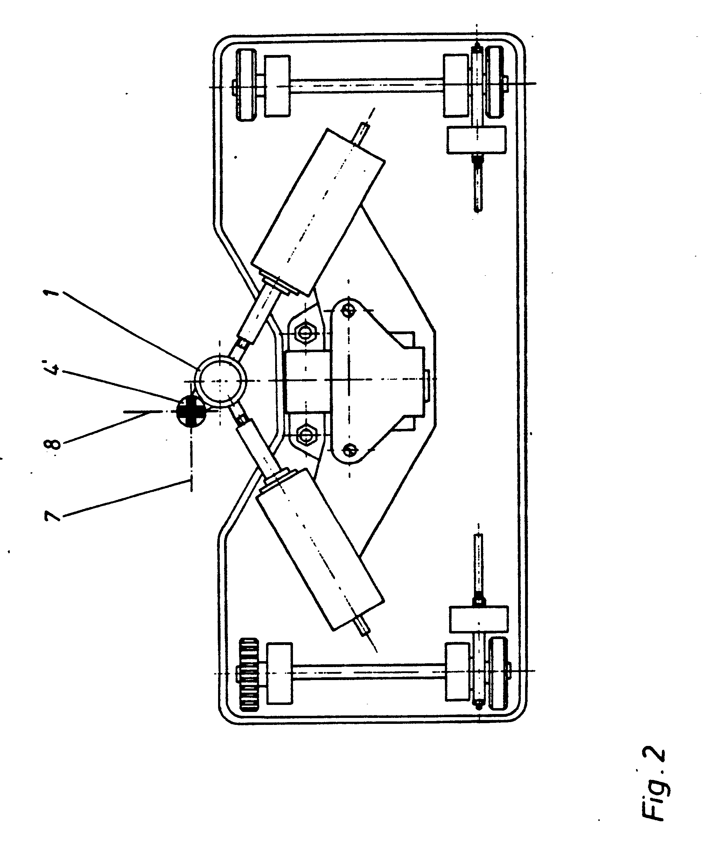

In Fig. 2 ist diese Lupe 4 in Draufsicht gezeichnet und die Vergrösserung der Mass-7 und Massbezugslinie 8 durch die Lupe 4 sowie die offensichtliche Erleichterung der genauen Gerätejustierung durch Vergrösserung des bestimmenden Zeichnungsdetails in Verbindung mit z.B. einer Ringmarke um die optische Lupenachse dargestellt.

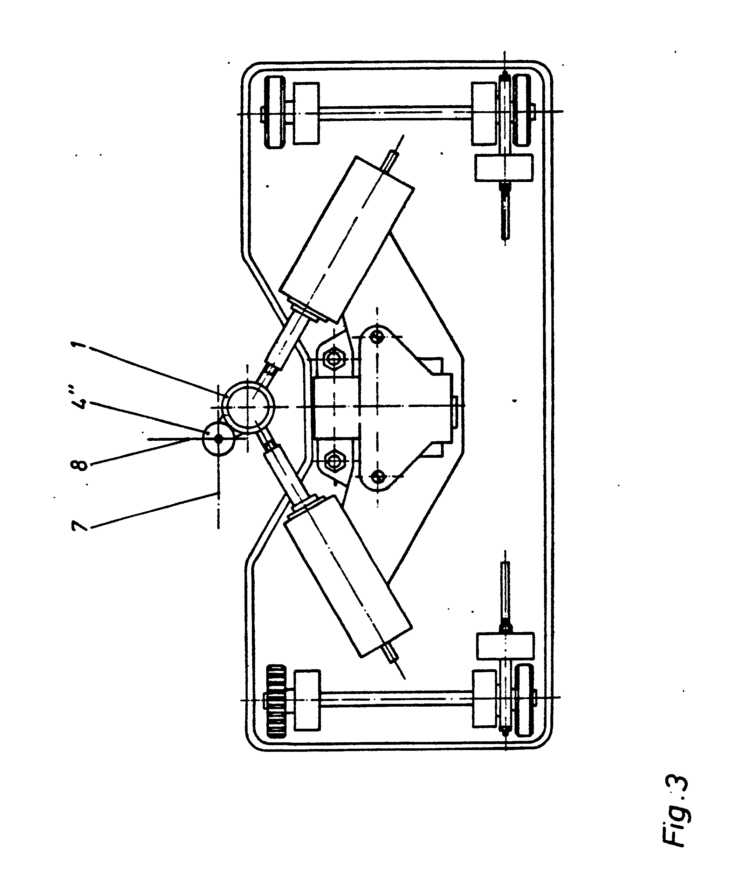

Fig. 3 zeigt eine erfindungsgemässe Justierhilfe in Form einer Lochblende 4''. Hier wird von der Tatsache Gebrauch gemacht, dass das menschliche Auge kleine Masse, in diesem Fall die Lageabweichungen des Linienkreuzes 7, 8 von der Mitte des Blendenloches, besonders fein beurteilen und von der zugeordneten Bedienerhand korrigieren lassen kann.

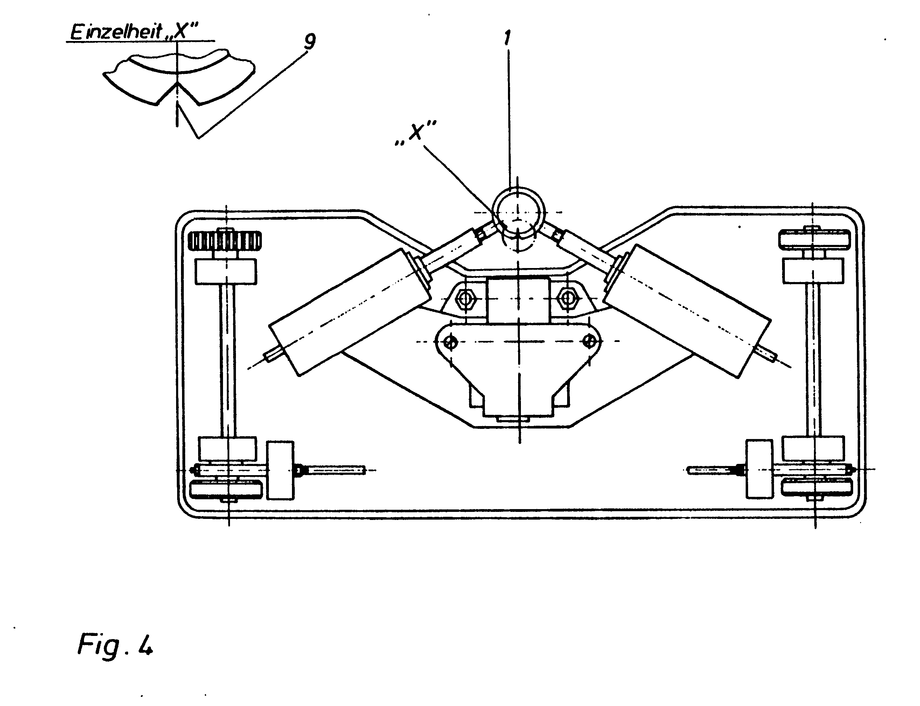

Fig. 4 zeigt eine in die kegelförmige Aussenfläche des Schreibgelenks eingearbeitete keilförmige Nut 9, deren Richtung und Lage so gelegt sind, dass eine durch den Nutgrund gelegte Visierlinie die Zeichenfläche im Aufsetzpunkt der Schreibstiftspitze 2 durchdringt. Auch hier wird die hohe Auflösung des menschlichen Auges für feine Einzelheiten und Abstände zum genauen Justieren der Schreibspitze des Geräts herangezogen.

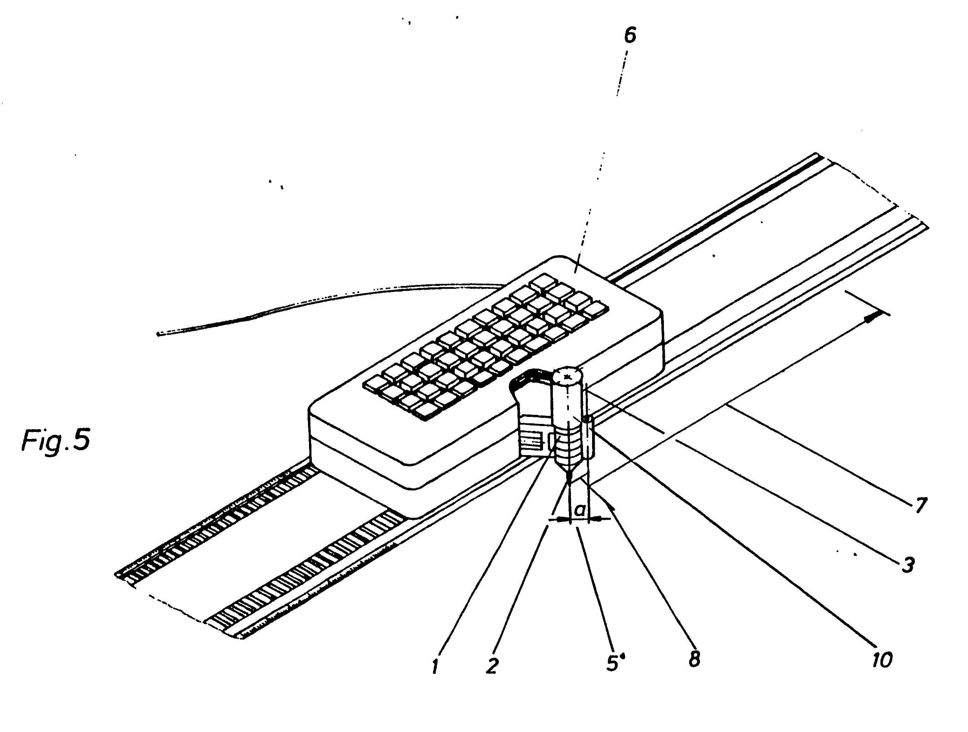

Fig. 5 zeigt schliesslich eine Justierhilfe in Form eines durch einen biegsamen Lichtleiter 10 oder einen Spiegel (nicht gezeichnet) auf die Zeichenfläche gesandten Strahl gebündelten Lichtes, dessen Schnittpunkt mit der Zeichenfläche die Schreibposition markiert und dessen Abstand von der Schreibspitze 2 von der Steuerung des Geräts wie vorbeschrieben korrigiert wird.

**Patentansprüche**

1. Automatisch arbeitendes Zeichengerät mit einem mit Rädern oder Rollen ausgestatteten, auf der Schreibebene verfahrbaren und die steuerbare Schreibeinrichtung tragenden Wagen, der mit einer Schreibdruckregulierungsvorrichtung aus einer Schwenkeinheit mit Blattfedern, Hohlwellenmotoren mit Gewindespindeln zum Tragen der Schreibstifthalterung, sowie einem Gleichstrommotor mit Exzenterscheibe zum Heben und Senken des Schreibstifts, ausgestattet und mit gezahnten Rädern oder Rollen ausgerüstet ist, die auf einem auf der Schreibebene aufliegenden Zahnstangenlineal kämmen, das zur Erleichterung der Bemassung mit einer Skalierung versehen ist dadurch gekennzeichnet,

dass in nahem Abstand (5) zur Schreibspitze (2) am Schreibgelenk (1) eine Justierhilfe in Form einer Zentrierlupe (4, 4'), einer Strichplatte, einer Lochblende (4") oder einer Visierkerbe (9) angeordnet ist, wobei der Abstand (a) zwischen der mit der Justierhilfe ermittelten Anschreibposition und der von der Schreibstiftspitze während der Justierung tatsächlich eingenommenen Position vor dem anschreiben automatisch durch eine Steuerung ausgeglichen wird, wenn dieser Abstand (a) grösser als null ist.

2. Zeichengerät nach Anspruch 1, dadurch gekennzeichnet, dass die erwähnten Justierhilfen durch eine in Form eines biegsamen Lichtleiters (10) oder eines Spiegels ausgebildete Justierhilfe ersetzt sind, dessen auf die Zeichenfläche gesandten Strahl gebündelten Lichts am Schnittpunkt mit der Zeichenfläche die Schreibposition markiert, wobei der Abstand (a) zur Schreibspitze (2) von der Steuerung des Geräts ausgeglichen wird.

## Claims

1. Automatically operating drawing device with a carriage which is equipped with wheels or rollers, is movable on the writing plane, carries the controllable writing equipment, is equipped with a writing pressure control equipment of a pivot unit with leaf springs, hollow shaft motors with threaded spindles for carrying the pencil mounting as well as with a direct current motor with eccentric disc for the raising and lowering of the pencil and which is provided with toothed wheels or rollers which mesh on a toothed rack ruler which rests on the writing plane and is provided with a scaling to facilitate the dimensioning, characterised thereby, that an adjusting aid in the form of a centring lens (4, 4'), a graticule, an apertured diaphragm (4") or a sighting notch (9) is arranged at the writing hinge (1) at a close spacing (5) from the writing point (2), wherein the spacing (a) between the initial writing position determined by the adjusting aid and the position actually assumed by the pencil point during the adjustment is compensated for automatically by a control before starting to write when this spacing (a) is greater than zero.

2. Drawing device according to claim 1, characterised thereby, that the mentioned adjusting aids are replaced by an adjusting aid, which is constructed in the form of a flexible optical conductor (10) or a mirror and the beam of bundled light of which is transmitted to the drawing surface and at the intersection with the drawing surface marks the writing position, wherein the spacing (a) from the writing point (2) is compensated for by the control of the device.

## Revendications

1. Appareil à dessiner travaillant automatiquement et comportant un chariot qui est muni de roues ou de rouleaux, qui peut se déplacer sur le plan d'écriture, qui porte le dispositif d'écriture que l'on peut commander, qui est muni d'un dispositif de régulation de la pression d'écriture constitué d'un groupe pivotant avec ressorts à lames, de moteurs à arbre creux avec vis-mère pour porter le support de la pointe à écrire, ainsi que d'un moteur à courant continu à excentrique pour lever et abaisser la pointe à écrire et qui est équipé de roues ou de rouleaux dentés qui engrènent sur une crémaillère placée sur le plan d'écriture et munie d'une échelle pour faciliter l'inscription des cotes,

caractérisé en ce qu'à faible distance (5) de la pointe à écrire (2), sur le support articulé pour écriture (1), est disposé un auxiliaire d'alignement sous forme d'une loupe d'alignement (4, 4') d'un réticule, d'un diaphragme à trou (4") ou d'une encoche de visée (9) étant précisé que la distance (A) entre la position d'écriture obtenue avec l'auxiliaire d'alignement et la position effectivement prise par la pointe à écrire pendant l'alignement est automatiquement compensée, avant l'écriture, par une commande si cette distance (a) est supérieure à zéro.

2. Appareil à dessiner selon la revendication 1, caractérisé en ce que les auxiliaires d'alignement mentionnés sont remplacés par un auxiliaire d'alignement conçu sous forme d'un conducteur optique souple (10) ou d'un miroir dont le rayon de lumière focalisée envoyé sur la surface du dessin repére la position d'écriture au point de rencontre avec la surface du dessin, étant précisé que la distance (A) à la pointe à écrire (2) est compensée par la commande de l'appareil.

Fig.1

0 092 050

Fig. 2

7  8  4'  1

0 092 050

Fig.3

Einzelheit „X"

9

1

„X"

Fig. 4

*Fig.5*

0 092 050